# EUROPÄISCHE PATENTSCHRIFT

(11) **EP 2 674 789 B1**
(45) Veröffentlichungstag und Bekanntmachung des Hinweises auf die Patenterteilung: **30.12.2020**
(21) Anmeldenummer: 13002921.8
(22) Anmeldetag: 06.06.2013
(51) Int. Cl.: G01V 3/08, G01V 7/00, G01V 11/00, G08G 1/042, G08G 1/14

(54) **Vorrichtung und Verfahren zur berührungslosen Detektion von Fahrzeugen**
Apparatus and method for the contactless detection of vehicles
Dispositif et procédé destinés à la détection sans contact de véhicules

(30) Priorität: 12.06.2012 DE 102012011474; 19.07.2012 DE 102012014303
(43) Veröffentlichungstag der Anmeldung: 18.12.2013
(73) Patentinhaber: MobiliSis GmbH, 64646 Heppenheim (DE)
(72) Erfinder: Gmajnic, Nikola, 42000 Varazdin (HR); Mestric, Kresimir, 42202 Trnovec Bartolovecki (HR); Vietor, Uli, 64646 Heppenheim (DE)
(74) Vertreter: Plate, Jürgen

(56) Entgegenhaltungen:
- US-A- 5 491 475
- US-A1- 2003 011 492
- US-A1- 2009 273 340

## Beschreibung

Die vorliegende Erfindung betrifft eine Vorrichtung und ein Verfahren zur berührungslosen Detektion von Fahrzeugen, wobei ein oder mehrere Magnetometer für die Messung des geomagnetischen Feldes verwendet werden.

Die Verwendung von Magnetometern, insbesondere von Induktionsschleifen für die berührungslose Detektion von Fahrzeugen ist aus dem Stand der Technik bekannt. US2009/0273340A1 beschreibt einen selbstkalibrierenden Magnetfeldmonitor. Da die Installation von Induktionsschleifen raumgreifend und aufwendig ist, wird intensiv nach alternativen Konzepten, die kompakte Magnetometer, insbesondere magnetoresistive Sensoren nutzen, gesucht. Den bisherigen Bemühungen war bislang nur beschränkter Erfolg beschieden. Dies liegt vor allem daran, dass das Messsignal von kompakten Magnetometern proportional zur Magnetfeldstärke in einem Raumpunkt, d.h. der Position des eigentlichen Sensorelements ist. Hierdurch bedingt kann anhand des Messsignals von kompakten Magnetometern nicht unterschieden werden, ob sich ein Fahrzeug unmittelbar oberhalb oder unterhalb des Magnetometers oder lediglich in dessen Nähe befindet. Gleiches gilt für bewegte Fahrzeuge, d.h. es ist nicht möglich anhand des Messsignals eines kompakten Magnetometers festzustellen, ob das Fahrzeug unmittelbar oberhalb oder unterhalb des Magnetometers oder mit einem lateralen bzw. horizontalen Versatz von bis zu 20 Metern an dem Magnetometer vorbei bewegt wird. Dementsprechend können mit einem kompakten Magnetometer in stehendem und fließendem Verkehr Fahrzeugtypen, wie Pkw, Lkw usw. nicht mit hinreichender Sicherheit voneinander unterschieden werden. Zudem sind die auf kompakten Magnetometern basierenden Vorrichtungen störanfällig und weisen eine Fehlerrate von größer 3 % auf.

Im Rahmen der vorliegenden Erfindung bezeichnet der Begriff "Fehlerrate" jeglichen Fehler, der bei der Erfassung und Klassifizierung von stehenden oder bewegten Fahrzeugen, insbesondere von in fließendem Verkehr bewegten Fahrzeugen auftritt. Im Weiteren umfasst im Rahmen der vorliegenden Erfindung der Begriff "Fahrzeug" verschiedene Fahrzeugklassen, insbesondere Pkw, Pkw mit Anhänger, Lkw, Lkw mit Anhänger, Lieferwagen, Busse, Sattelzüge und Krafträder.

Die Fehlerrate der erfindungsgemäßen Vorrichtung wird durch Vergleichsmessung ermittelt, wobei die Vorrichtung und simultan ein Referenzverfahren, wie beispielsweise eine Lichtschranke in Verbindung mit einem automatisierten digitalen Bildverarbeitungs- und Mustererkennungssystem eingesetzt werden. Als Fehler wird jede falsch-positive oder falschnegative Detektion eines ruhenden oder fahrenden Fahrzeuges und jegliche falsche Klassifizierung einer wahr-positiven Detektion gewertet. Die von der Vorrichtung erfassten Fahrzeuge werden beispielsweise in acht bzw. neun Kategorien klassifiziert: Pkw, Pkw mit Anhänger, Lkw, Lkw mit Anhänger, Lieferwagen, Bus, Sattelzug, Kraftrad und Sonstige. Die Fehlerrate bezeichnet das Verhältnis aus sämtlichen Fehlern zu allen Detektionsvorgängen. Eine falsch-positive Detektion kann auftreten, wenn die Vorrichtung für einen Stellplatz eines Parkplatzes fälschlicherweise einen Einfahrvorgang anzeigt, obgleich lediglich auf einem benachbarten Stellplatz eine Fahrzeugbewegung stattfindet. Bei einer falsch-negativen Detektion wird ein ruhendes oder fahrendes Fahrzeug fälschlicherweise nicht registriert.

Eine der Ursachen für Fehler bei der magnetfeldbasierten Detektion von Fahrzeugen besteht darin, dass bei den bekannten Vorrichtungen, das Magnetfeld nicht getrennt nach Raumrichtungen bzw. vektoriellen Anteilen gemessen wird. Dies liegt vor allem daran, dass bei der Installation der bekannten Vorrichtungen die Magnetometer nicht in einer genau definierten räumlichen Ausrichtung montiert werden. Obgleich einer präzisen Justage der Magnetometer keine grundsätzlichen Hindernisse entgegenstehen, ist der damit verbundene Arbeitsaufwand beträchtlich. Ein weiteres Problem besteht darin, dass sich im Laufe von wenigen Monaten bis einigen Jahren aufgrund von Bodensetzung, thermischen Effekten oder Straßenschäden die Ausrichtung der Magnetometer ändern kann und die ursprünglichen Justageeinstellungen verloren gehen.
In nördlichen Breitengraden, wie beispielsweise Nord- und Zentraleuropa ist die Vertikalkomponente des Erdmagnetfeldes größer als die Horizontalkomponente. Am geomagnetischen Äquator, der unter anderem durch den Norden Brasiliens und Nigeria verläuft ist die Vertikalkomponente des Erdmagnetfeldes hingegen verschwindend klein. Im Rahmen der vorliegenden Erfindung haben die Begriffe "Vertikalkomponente" und "Horizontalkomponente" ihre übliche Bedeutung und beziehen sich auf Richtungen, die an dem jeweiligen geographischen Standort radial vom Erdmittelpunkt weg weisen, respektive in einer Ebene liegen, die parallel zum Boden bzw. senkrecht zur Vertikalkomponente orientiert ist. Die Horizontalkomponente des Erdmagnetfeldes ist außerhalb der Erdkugel, abgesehen von geringfügigen geographischen Abweichungen vom geomagnetischen Nordpol zum geomagnetischen Südpol gerichtet. Die metallischen Bestandteile eines Fahrzeuges schirmen das Erdmagnetfeld ab und/oder verzerren das Erdmagnetfeld. Häufig wird das Erdmagnetfeld derart verändert, dass die Magnetfeldstärke bzw. die Magnetfeldlinien in der Umgebung des Fahrzeugs richtungsabhängig abgeschwächt sind. Wird ein Fahrzeug, wie ein Pkw oder ein Lkw an einem räumlich fixierten Magnetometer für die Messung des Erdmagnetfelds vorbei bewegt, so registriert das Magnetometer bei der Passage des Fahrzeugs eine zeitlich variierende, transiente bzw. impulshafte Abnahme der Magnetfeldstärke. Sobald das Fahrzeug das Magnetometer vollständig passiert hat und sich entfernt, steigt die Magnetfeldstärke und somit das Ausgangssignal des Magnetometers wieder auf den vorherigen Wert bzw. Pegel an. Einige Fahrzeugkomponenten enthalten magnetisierbare Materialien, wie Weicheisen, welche die Feldlinien des Erdmagnetfeldes anziehen bzw. bündeln. Wird eine derartige Fahrzeugkomponente in einem Abstand von bis zu einigen Metern an einem Magnetometer vorbeigeführt, so registriert dieses eine zeitlich variierende, transiente bzw. impulshafte Zunahme der Magnetfeldstärke. Die Geschwindigkeit, mit der die Abschwächung oder Verstärkung des Erdmagnetfeldes am Ort des Magnetometers erfolgt, hängt zum einen von der Geschwindigkeit des Fahrzeugs und zum anderen von dem Winkel zwischen der Bewegungsrichtung des Fahrzeugs und der Richtung der magnetischen Feldlinien ab. Für die Vertikalkomponente des Erdmagnetfeldes beträgt dieser Winkel stets 90 Grad. Für die Horizontalkomponente hingegen kann dieser Winkel zwischen Null und 180 Grad betragen. Je nach dem Winkel, unter dem sich das Fahrzeug zu der Horizontalkomponente des Erdmagnetfeldes bewegt, wird die Horizontalkomponente des Erdmagnetfeldes in der Umgebung des Fahrzeugs mehr oder minder schnell abgeschwächt oder verstärkt. D.h. dass die zeitliche Ableitung bzw. das zeitliche Differential der Horizontalkomponente des Erdmagnetfeldes von der Fahrzeuggeschwindigkeit und dem Winkel zwischen der Bewegungsrichtung des Fahrzeugs und der Horizontalkomponente des Erdmagnetfeldes abhängt.
Aus den vorstehenden Erläuterungen ist ersichtlich, dass eine nach vektoriellen Komponenten getrennte Messung des Erdmagnetfeldes, insbesondere eine Separation in die Vertikalkomponente und die Horizontalkomponente des Erdmagnetfeldes vorteilhaft ist und es ermöglicht, die Messgenauigkeit bzw. Detektionsempfindlichkeit zu erhöhen.

Die vorliegende Erfindung hat die Aufgabe, die vorstehenden Probleme zu überwinden. Insbesondere sollen eine Vorrichtung und ein Verfahren mit einer Fehlerrate von kleiner 3 % bereitgestellt werden.

Die erste Aufgabe der vorliegenden Erfindung wird gelöst durch eine Vorrichtung mit einem oder mehreren Magnetometern für die Messung des geomagnetischen Feldes, wobei das mindestens eine Magnetometer eine Einrichtung für die Messung des Gravitationsfeldes umfasst.

Weiterbildungen der erfindungsgemäßen Vorrichtung sind dadurch gekennzeichnet, dass:
- die Vorrichtung eine oder mehrere Gruppen von Magnetometern umfasst, wobei jede Gruppe zwei, drei, vier oder mehr, entlang einer verkehrstechnisch vorgegebenen Fahrtrichtung und voneinander beabstandet angeordnete Magnetometer umfasst;
- die Vorrichtung ein oder mehrere elektronische Auswertemodule umfasst, die mit einem integrierten Schaltkreis, wie beispielsweise einem Mikroprozessor, einem digitalen Signalprozessor (DSP), einem Field Programmable Gate Array (FPGA) oder einem Application Specific Integrated Circuit (ASIC) ausgestattet und mit dem mindestens einen Magnetometer verbunden oder integriert sind;
- das mindestens eine elektronische Auswertemodul einen nichtflüchtigen digitalen Speicher, wie beispielsweise ein Flash-EEPROM umfasst;
- jedes der Magnetometer mindestens einen Magnetfeldsensor und mindestens einen Gravitationssensor/Beschleunigungssensor umfasst;
- jedes der Magnetometer drei Magnetfeldsensoren umfasst, die derart angeordnet sind, dass die Ausgangssignale der drei Magnetfeldsensoren jeweils proportional sind zu der Magnetfeldstärke in drei zueinander nicht koaxialen Raumrichtungen, vorzugsweise in drei zueinander orthogonalen Raumrichtungen;
- der mindestens eine Magnetfeldsensor als integrierter elektronischer Schaltkreis ausgebildet ist;
- der mindestens eine Magnetfeldsensor auf dem magnetoresistiven (MR-), anisotropmagnetoresistiven (AMR-), giant-magnetoresistiven (GMR-), tunnel-magnetoresistiven (TMR-) oder giant-magnetic-inductance (GMI-) Effekt basiert;
- der mindestens eine Magnetfeldsensor als Fluxgate-Magnetometer (Förster-Sonde) ausgebildet ist;
- jedes der Magnetometer drei Gravitationssensoren umfasst, die derart angeordnet sind, dass die Ausgangssignale der drei Gravitationssensoren jeweils proportional sind zu der Erdbeschleunigung in drei zueinander nicht koaxialen Raumrichtungen, vorzugsweise in drei zueinander orthogonalen Raumrichtungen;
- der mindestens eine Gravitationssensor als mikro-elektro-mechanisches Bauelement (MEMS) ausgebildet ist;
- die Vorrichtung ein Soft- oder Firmwareprogramm umfasst mit einem geometrischen Algorithmus zur Berechnung der vertikalen und/oder horizontalen Komponente des geomagnetischen Feldes;
- die Vorrichtung ein Bus-System, wie beispielsweise einen CAN-Bus umfasst;
- die Vorrichtung eine Empfangs- und Sendeeinheit für Mobilfunk und/oder eine Empfangs- und Sendeeinheit für Ethernet umfasst; und/oder
- das mindestens ein Magnetometer über das Internet mit dem mindestens einen elektronischen Auswertemodul verbunden ist.

Die zweite Aufgabe der vorliegenden Erfindung wird gelöst durch ein Verfahren zur berührungslosen Detektion von Fahrzeugen, umfassend die Schritte:
(a) Bereitstellen einer oder mehrerer Vorrichtungen, umfassend ein oder mehrere Magnetometer für die Messung des geomagnetischen Feldes und des Gravitationsfeldes sowie ein oder mehrere elektronische Auswertemodule, wobei die Magnetometer oberhalb oder unterhalb der Oberfläche einer Fahrbahn oder eines Parkplatzes angeordnet und mit dem mindestens einen Auswertemodul verbunden sind;
(b) Übertragung der Ausgangssignale der Magnetometer an das mindestens eine Auswertemodul; und
(c) softwaregestützte Verarbeitung der Ausgangssignale der Magnetometer in dem mindestens einen Auswertemodul und Übersetzung in Ausgabesignale.
   Weiterbildungen des erfindungsgemäßen Verfahrens sind dadurch gekennzeichnet, dass:
   - die in Schritt (c) erzeugten Ausgabesignale drahtgebunden, glasfasergebunden oder drahtlos an ein elektronisches Steuerungs- und/oder Informationssystem übertragen werden;
   - die Magnetfeldstärke in drei zueinander nicht koaxialen Raumrichtungen, vorzugsweise in drei zueinander orthogonalen Raumrichtungen gemessen wird;
   - die Gravitation bzw. Erdbeschleunigung in drei zueinander nicht koaxialen Raumrichtungen, vorzugsweise in drei zueinander orthogonalen Raumrichtungen gemessen wird;
   - in Schritt (c) die vertikale und/oder horizontale Komponente des geomagnetischen Feldes anhand der mit dem mindestens einen Magnetometer gemessenen Stärke und Richtung des geomagnetischen Feldes berechnet wird auf Basis einer geometrischen Transformation, deren Parameter aus der mit dem Magnetometer gemessenen Stärke und Richtung des Gravitationsfeldes bestimmt werden;
   - in Schritt (b) und (c) die Ausgangssignale von zwei, drei, vier oder mehr entlang einer verkehrstechnisch vorgegebenen Fahrtrichtung und voneinander beabstandet angeordneten Magnetometern an das Auswertemodul übertragen und verarbeitet werden, um Ausgabesignale zu erzeugen;
   - in Schritt (b) und (c) die Ausgangssignale von einem oder mehreren oberhalb oder unterhalb eines ersten Stellplatzes eines Parkplatzes angeordneten Magnetometern und die Ausgangssignale von einem oder mehreren oberhalb oder unterhalb eines zweiten, dritten und/oder vierten Stellplatzes des Parkplatzes angeordneten Magnetometern an das Auswertemodul übertragen und verarbeitet werden, um Ausgabesignale zu erzeugen, wobei der zweite, dritte und/oder vierte Stellplatz zu dem ersten Stellplatz benachbart sind;
   - in Schritt (c) zur Verarbeitung der Ausgangssignale ein wissensbasierter Algorithmus in Verbindung mit einer Datenbank mit vorgegebenen Parametern eingesetzt wird; und/oder
   - in Schritt (c) zur Verarbeitung der Ausgangssignale ein künstliches neuronales Netz in Verbindung mit einer Datenbank mit vorgegebenen Gewichtsparametern eingesetzt wird.
Im Weiteren betrifft die Erfindung ein Verkehrsleitsystem, umfassend eine oder mehrere der vorstehend beschriebenen Vorrichtungen und eine oder mehrere, mit der mindestens einen Vorrichtung verbundene Leiteinrichtungen, Signalvorrichtungen und / oder Informationssysteme, wie beispielsweise Ampeln, Lichtsignalanlagen, Schranken und Navigationssysteme.
Die vorliegende Erfindung löst das vorstehend beschriebene Problem einer zu hohen Fehlerrate bei der Detektion von Fahrzeugen unter anderem dadurch, dass sie eine Vorrichtung und ein Verfahren bereitstellt, in welchen die Stärke des geomagnetischen Feldes und/oder deren transiente impulsartige Veränderung durch ruhende oder bewegte Fahrzeuge sowie das Gravitationsfeld bzw. die Erdbeschleunigung quasi-kontinuierlich mit einer Frequenz von einigen Hertz bis einigen Zehntausend Hertz gemessen und anhand der Stärke und Richtung des Gravitationsfeldes die Vertikal- und Horizontalkomponente des geomagnetischen Feldes separiert wird. Dementsprechend umfassen die Vorrichtung und das Verfahren der vorliegenden Erfindung eine automatische elektronische Richtungskalibrierung, die eventuelle Fehljustagen oder Verkippungen der zur Messung des Erdmagnetfeldes eingesetzten Magnetometer dynamisch kompensiert.
Eine wichtige Funktion des elektronischen Auswertemoduls besteht darin, in Schritt (c) des erfindungsgemäßen Verfahrens die vertikale und/oder horizontale Komponente des geomagnetischen Feldes anhand der mit dem mindestens einen Magnetometer gemessenen Stärke und Richtung des geomagnetischen Feldes auf Basis einer geometrischen Transformation, deren Parameter aus der mit dem Magnetometer gemessenen Stärke und Richtung des Gravitationsfeldes bestimmt werden, zu berechnen.
Je nach Anwendung der vorliegenden Erfindung, insbesondere für die Detektion von bewegten Fahrzeugen in fließendem Verkehr oder für die Detektion von ruhenden und bewegten Fahrzeugen in beschrankten Ein- und Ausfahrten sowie auf Parkplätzen, wird die von den Magnetometern gemessene Stärke des Erdmagnetfeldes quasi-statisch und/oder dynamisch verarbeitet bzw. ausgewertet. Bei der quasi-statischen Auswertung wird zu einem beliebig festgelegten Referenzeitpunkt die Stärke des Erdmagnetfeldes, ggf. separat nach Vertikal- und Horizontalkomponente gemessen und die ermittelten Werte in einem elektronischen Speicher, vorzugsweise in einem Flash-EEPROM abgelegt. Mit einer vorgegebenen Zykluszeit im Bereich von Mikrosekunden bis zu einigen Sekunden wird die Stärke des Magnetfeldes erneut gemessen und die erhaltenen aktuellen Werte mit den, in dem elektronischen Speicher gehaltenen Referenzwerten verglichen. Wenn die Differenz zwischen den aktuellen und den Referenzwerten einen vorgegebenen Schwellwert übersteigt, wird von einem relevanten Ereignis ausgegangen und eine Software basierte bzw. Firmware basierte algorithmische Weiterverarbeitung der Messwerte initiiert.
Bei der dynamischen Auswertung der mit den Magnetometern gemessenen Magnetfeldstärke, wird die ggf. nach Vertikal- und Horizontalkomponente separierte Magnetfeldstärke elektronisch nach der Zeit abgeleitet bzw. differenziert. Das zeitliche Differential wird mittels bekannter elektronischer Einrichtungen, wie beispielsweise eines Differentiators bzw. eines invertierenden Verstärkers mit einer Zeitkonstante im Bereich von einigen Mikrosekunden bis einige Hundert Millisekunden gebildet. Wenn das zeitliche Differential einen vorgegebenen Schwellwert übersteigt, wird von einem relevanten Ereignis ausgegangen und eine Software basierte bzw. Firmware basierte algorithmische Weiterverarbeitung der Messwerte initiiert.

Die Erfindung ermöglicht es, fahrende und ruhende, insbesondere auf Parkplätzen geparkte Fahrzeuge, wie beispielsweise Pkw und Lkw mit hoher Zuverlässigkeit zu detektieren und, sofern erforderlich zu klassifizieren.

Die Erfindung wird nachfolgend anhand von Figuren näher erläutert. Es zeigen:
- Fig. 1: eine Schnittansicht einer Fahrbahn, die mit einer Vorrichtung mit mehreren Magnetometern für die Detektion von Fahrzeugen ausgestattet ist;
- Fig. 2-3: Draufsichten von Parkplätzen mit Vorrichtungen zur berührungslosen Detektion von Fahrzeugen;
- Fig. 4: eine bevorzugte Anordnung von Magnetometern innerhalb eines Stellplatzes eines Parkplatzes;
- Fig. 5: ein Blockdiagramm mit wesentlichen Komponenten einer Vorrichtung zur berührungslosen Detektion von Fahrzeugen;
- Fig. 6-7: schaltungstechnische Diagramme mit wesentlichen Funktionsblöcken;
- Fig. 8: ein Flußdiagramm der Signal- und Datenverarbeitung; und
- Fig. 9a-b: die räumliche Ausrichtung eines Magnetometers.

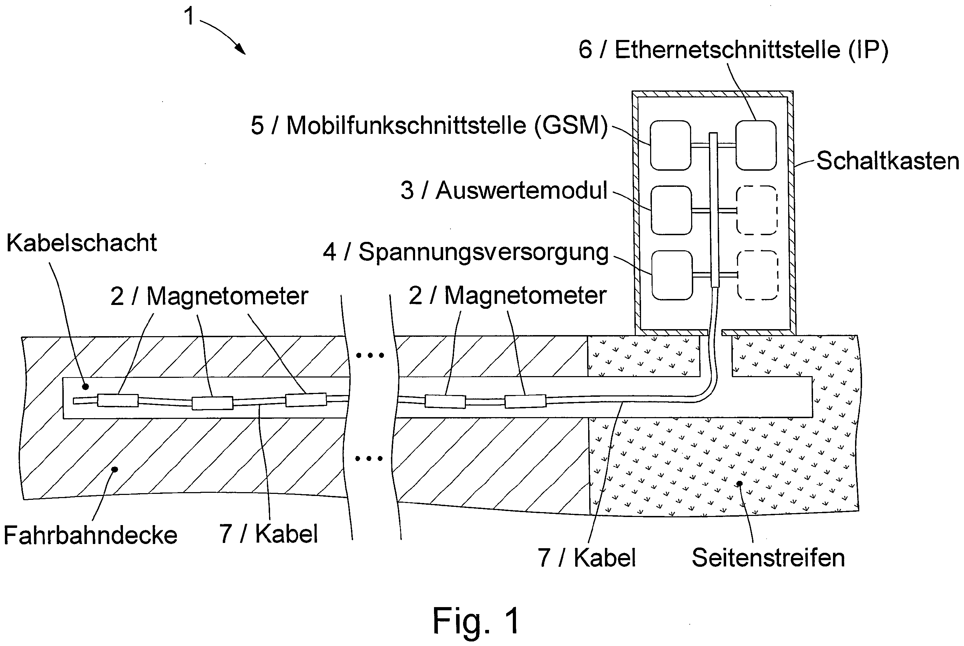

Fig. 1 zeigt schematisch eine Schnittansicht einer Fahrbahn oder eines Parkplatzes, die mit einer erfindungsgemäßen Vorrichtung 1 ausgerüstet sind. Die in Fig. 1 dargestellte beispielhafte Vorrichtung 1 umfasst mehrere Magnetometer 2 für die Messung der Magnetfeldstärke und des Gravitationsfeldes. Im Rahmen der Erfindung sind jedoch auch Vorrichtungen vorgesehen, die lediglich ein Magnetometer aufweisen. Zur Installation der Vorrichtung 1 wird zunächst in der Fahrbahndecke eine Ausnehmung bzw. ein Kabelschacht in Form einer Nut, einer Horizontalbohrung oder Kernbohrung angefertigt. In die Ausnehmung wird ein "autarkes Magnetometer" oder ein Kabel 7 mit einem oder mehreren an das Kabel 7 angeschlossenen Magnetometern 2 für die Messung der Magnetfeldstärke und des Gravitationsfeldes eingelegt bzw. eingeführt. Der Begriff "autarkes Magnetometer" ist weiter unten näher erläutert. Sofern die Vorrichtung mehrere Magnetometer 2 umfasst, können benachbarte Magnetometer 2 entlang des Kabels 7 jeweils in gleichem Abstand oder in variierendem Abstand zueinander angeordnet sein. Typischerweise beträgt der Abstand zwischen benachbarten Magnetometern 30 cm bis 20 m, 30 cm bis 10 m, 30 cm bis 3 m und vorzugsweise 30 cm bis 100 cm. Das Kabel 7 umfasst mindestens eine Ader, vorzugsweise zwei oder mehr Adern für Spannungsversorgung und mindestens eine, vorzugsweise zwei oder mehr Adern für die Übertragung von analogen und/oder digitalen Signalen. Vorzugsweise ist das Kabel 7 gemäß der Norm für Controller Area Network (CAN) ausgebildet. Das Kabel 7 verbindet die Magnetometer 2 mit einer Spannungsversorgung 4, einem Auswertemodul 3 sowie mit einer oder mehreren Kommunikationsschnittstellen 5, 6 bzw. Sende- und Empfangseinheiten, insbesondere mit Kommunikationsschnittstellen für Mobilfunk 5 und/oder Ethernet 6. Die Kommunikationsschnittstelle für Mobilfunk 5 ist für den Betrieb gemäß einem oder mehreren der gängigen Standards wie beispielsweise GSM (Global System for Mobile Communications), UMTS (Universal Mobile Telecommunications System) oder LTE (Long Term Evolution) ausgestattet. Die Spannungsversorgung 4, das Auswertemodul 3 und die Kommunikationsschnittstelle 5, 6 sind in einem neben der Fahrbahn freistehend installierten oder in den Boden eingelassenen Schaltkasten angeordnet. In einer zweckmäßigen Weiterbildung der Erfindung ist das mindestens eine Magnetometer 2 über ein Wide Area Network (WAN), insbesondere über eine drahtgebundene, glasfasergebundene oder drahtlose Internetverbindung, beispielsweise via LTE (Long Term Evolution) mit dem mindestens einen elektronischen Auswertemodul 3 verbunden.
Die Anbindung der Magnetometer 2 an ein Wide Area Network, insbesondere an das Internet schafft die Grundlage für softwaregestütze Dienstleistungen, die in Fachkreisen üblicherweise mit dem Begriff "Software as Service" - abgekürzt "SAS" - bezeichnet werden. Hierbei werden die Ausgangssignale der Magnetometer 2 oder gegebenenfalls die Ausgabesignale der mit den Magnetometern 2 lokal installierten oder in die Magnetometer 2 integrierten Auswertemodule 3 an einen oder mehrere zentrale Server übermittelt und auf diesen Servern softwaregestützt verarbeitet, um direkt nutzbare Daten für Informations- und Verkehrsleitsysteme zu gewinnen. Sofern die Ausgangssignale der Magnetometer 2 direkt auf einen oder mehrere zentrale Server übertragen werden, fungieren der bzw. diese Server als Auswertemodule 3. Die dermaßen gewonnenen bzw. aufbereiteten Daten werden sodann über das Internet an den/die Nutzer übermittelt bzw. zum Abruf via Internet bereitgestellt. Im Hinlick auf Redundanz, Wartung, Reparatur, Fehlerbehebung und Updates von Hardware und Software bietet das SAS-Konzept gegenüber konventionellen Methoden, die auf dem Einsatz spezifischer, von dem Nutzer bereitgestellter Hardware und Software basieren, ein beträchtliches Potential für Kosteneinsparung.

In einer besonders zweckmäßigen Weiterbildung der Erfindung umfasst die Vorrichtung 1 ein Solarpanel sowie eine Batterie oder einen Akkumulator, um die für den Betrieb der Vorrichtung 1 benötigte elektrische Energie bereit zu stellen.

Erfindungsgemäß sind außerdem Vorrichtungen vorgesehen, bei denen eine Spannungsversorgung, vorzugsweise eine Batterie oder ein Akkumulator, ein Auswertemodul sowie eine Kommunikationsschnittstelle, insbesondere eine Empfangs- und Sendeeinheit für Mobilfunk in das Magnetometer integriert sind. Derartige "autarke" Vorrichtungen bzw. Magnetometer sind besonders einfach zu installieren, indem das Magnetometer in ein, in die Fahrbahndecke gebohrtes Senkloch (Kernbohrung) eingesetzt wird.
Erfindungsgemäß bevorzugt sind zwei, drei, vier oder mehr Magnetometer entlang einer verkehrstechnisch vorgegebenen Fahrtrichtung, insbesondere entlang einer mittig zwischen den Rändern einer Fahrspur verlaufenden Linie, und voneinander beabstandet angeordnet. Eine derartige Anordnung der Magnetometer verbessert die Datenqualität in signifikanter Weise und ermöglicht es, die Geschwindigkeit von bewegten Fahrzeugen im Fließverkehr sowie die Abstände bzw. die sogenannten Zeitlücken zwischen jeweils zwei unmittelbar aufeinanderfolgenden Fahrzeugen im Fließverkehr zu bestimmen. Die Zeitlücke zwischen unmittelbar aufeinanderfolgenden Fahrzeugen wird beispielsweise für die Steuerung von Lichtsignalanlagen bzw. Ampeln an Kreuzungen verwendet.

Im Weiteren schlägt die Erfindung Vorrichtungen vor, bei denen mehrere Magnetometer oder mehrere Gruppen von Magnetometern voneinander beabstandet entlang einer im Wesentlichen senkrecht zu einer vorgegebenen Fahrtrichtung verlaufenden Richtung angeordnet sind. Eine derartige Queranordnung ist für die Detektion von bewegten und ruhenden Fahrzeugen in mehrspurigem Fließverkehr, in mehrspurigen Ein- und Ausfahrten sowie auf Parkplätzen vorgesehen. Zusätzlich zu der Möglichkeit, Fahrzeuge in mehreren Spuren zu detektieren, verbessert eine derartige Queranordnung die Signalqualität und eliminiert durch "Übersprechen" von benachbarten Spuren verursachte Fehler praktisch vollständig. Der Begriff "Übersprechen" bezeichnet hierbei den Sachverhalt, dass ein auf einer ersten Fahrspur befindliches, ruhendes oder bewegtes Fahrzeug ein signifikantes Ausgangssignal in einem Magnetometer hervorruft, welches oberhalb oder unterhalb einer zur ersten Fahrspur benachbarten zweiten Fahrspur angeordnet ist.

In einer besonders bevorzugten Ausführungsform umfasst die erfindungsgemäße Vorrichtung mehrere Gruppen von Magnetometern, die unterhalb oder oberhalb von mehreren nebeneinander liegenden Fahrspuren angeordnet sind, wobei jede Gruppe zwei, drei, vier oder mehr Magnetometer umfasst, die entlang einer verkehrstechnisch vorgegebenen Fahrtrichtung, insbesondere entlang einer mittig zwischen den Rändern der jeweiligen Fahrspur verlaufenden Linie, und voneinander beabstandet positioniert sind. Eine derartige Vorrichtung vereint die in den beiden vorstehenden Absätzen beschriebenen messtechnischen Möglichkeiten und Vorteile für die Detektion von Fahrzeugen.

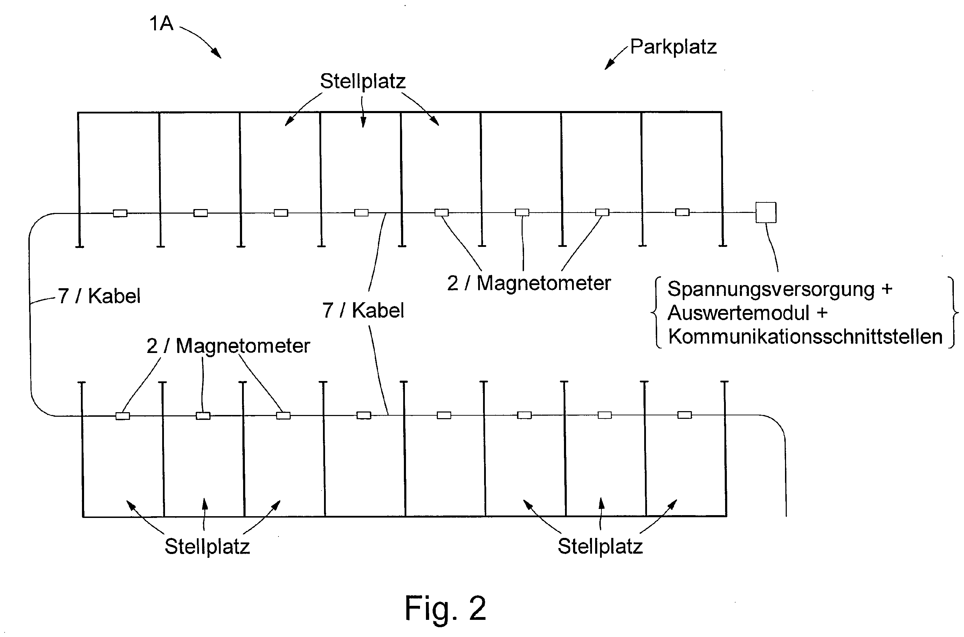

Fig. 2 zeigt in Draufsicht einen Parkplatz mit mehreren in Reihen angeordneten Stellplätzen, der mit einer erfindungsgemäßen Vorrichtung 1A ausgestattet ist, wobei jeweils ein Magnetometer 2 in der Fahrbahndecke eines Stellplatzes oder oberhalb eines Stellplatzes positioniert ist. Sämtliche Magnetometer 2 sind über ein Kabel 7 mit einer Spannungsversorgung, einem Auswertemodul und einer oder mehreren Kommunikationsschnittstellen verbunden.
Das Kabel 7 einschließlich der Magnetometer 2 können in einem Kabelschacht bzw. einer in die Fahrbahndecke geschnittenen Nut verlegt werden. Bei der Verlegung in einer Nut in der Fahrbahndecke werden das Kabel 7 und die Magnetometer 2 zum Schutz vor mechanischer und thermischer Einwirkung mit einem geeigneten Material, wie beispielsweise einer Schaumstofffolie, einem Schaumstoffschlauch oder einer polymeren Schaummasse abgedeckt oder umhüllt. Hieran anschließend wird die Nut mit Asphalt, Bitumen oder Beton aufgefüllt und versiegelt.

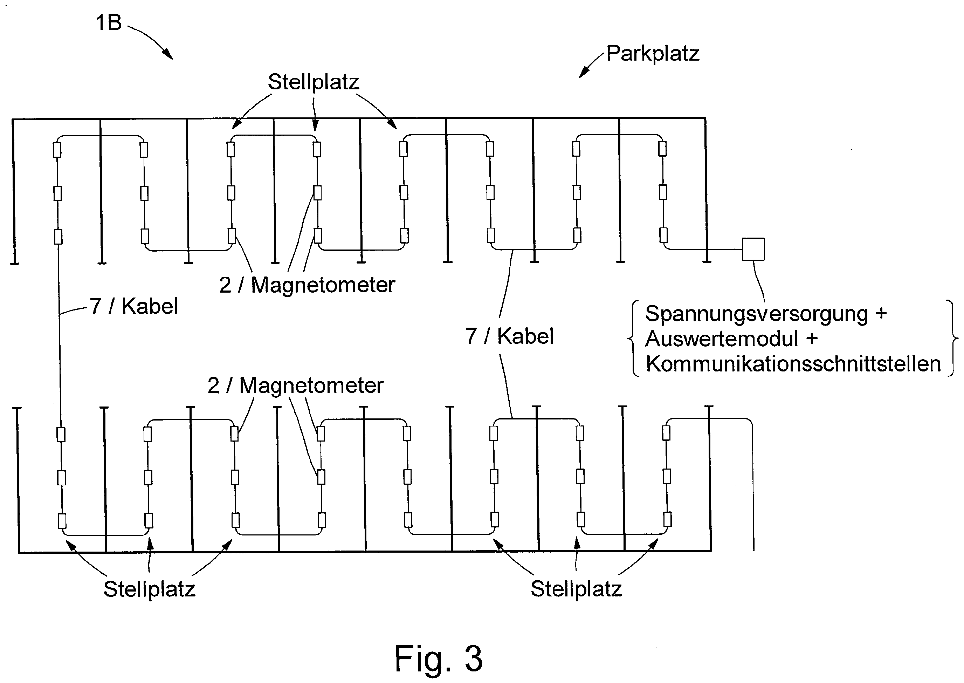

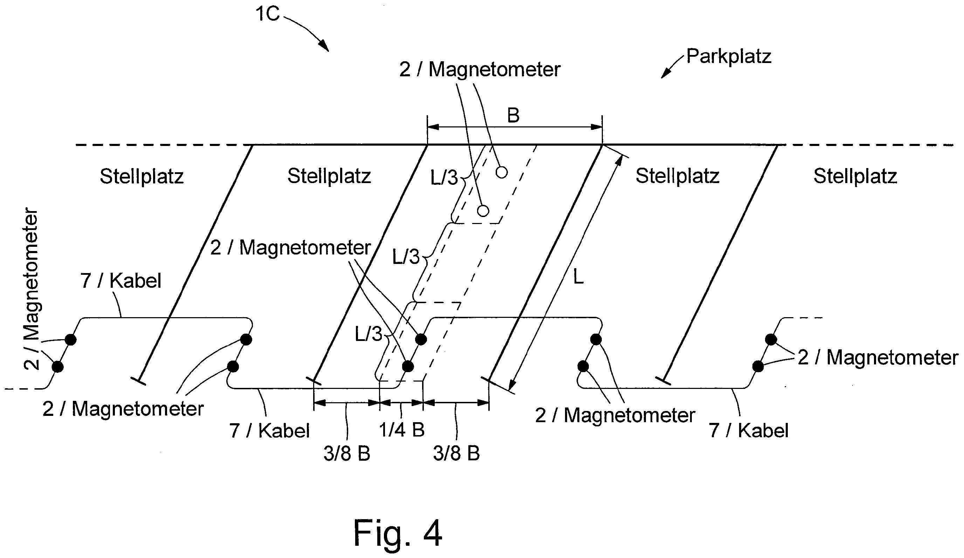

Fig. 3 zeigt in Draufsicht einen Parkplatz mit mehreren in Reihen angeordneten Stellplätzen und einer anderen zweckmäßigen Konfiguration einer erfindungsgemäßen Vorrichtung 1B, wobei in der Fahrbahndecke eines Stellplatzes oder oberhalb eines Stellplatzes drei Magnetometer 2 positioniert sind. Im Rahmen der Erfindung sind außerdem Konfigurationen vorgesehen, bei denen in der Fahrbahndecke eines Stellplatzes oder oberhalb eines Stellplatzes zwei, vier, fünf, sechs, sieben oder mehr Magnetometer angeordnet sind. Sämtliche Magnetometer 2 sind über ein Kabel 7 mit einer Spannungsversorgung, einem Auswertemodul und einer oder mehreren Kommunikationsschnittstellen verbunden. Wie in Fig. 4 dargestellt, ist der Verlauf des Kabels 7 mäanderförmig, wobei je Stellplatz des Parkplatzes ein im Wesentlichen geradlinig und parallel zur Längsachse des Stellplatzes angeordnetes Kabelsegment vorgesehen ist.

In anderen zweckmäßigen Weiterbildungen der Erfindung, werden mehrere Kabelsegmente stern- oder baumartig verlegt, wobei für jeden Stellplatz des Parkplatzes ein Kabelsegment mit einem oder mehreren Magnetometern vorgesehen ist und die Kabelsegmente jedes Stellplatzes an ein gemeinsames Hauptkabel angeschlossen sind.

Die erfindungsgemäße Vorrichtung eignet sich insbesondere für die Detektion von Fahrzeugen, wie beispielsweise Pkw und Lkw auf Parkplätzen, in Parkhäusern und auf Parkdecks. Hierbei ist vorgesehen, die Magnetometer in der Fahrbahndecke eines oder mehrerer Geschosse oder unterhalb einer oder mehreren Geschossdecken anzuordnen bzw. zu montieren. In einer besonders zweckmäßigen Ausführungsform der Erfindung werden das Kabel und die Magnetometer mittels Halteelementen, wie beispielsweise Kabelschellen und Schrauben an der Unterseite der Geschossdecke eines Parkhauses montiert. Bei derartig für Parkhäuser konfigurierten erfindungsgemäßen Vorrichtungen kann jedes Magnetometer zur Erfassung von Fahrzeugen bzw. zur Erfassung von Fahrzeugbewegungen ober- und unterhalb der jeweiligen Geschossdecke eingesetzt werden. Für die Verarbeitung der Ausgangssignale der Magnetometer in dem Auswertemodul ist eine entsprechend modifizierte Software bzw. Firmware vorgesehen, welche die von Fahrzeugen ober- und unterhalb der Geschossdecke verursachten Ausgangssignale diskriminiert. Dies ermöglicht es, den Installationsaufwand zu verringern, indem lediglich jede zweite Geschossdecke mit Magnetometern ausgestattet und dennoch alle Fahrzeuge und Fahrzeugbewegungen innerhalb des Parkhauses erfasst werden.

Fig. 4 zeigt in Draufsicht eine erfindungsgemäße Vorrichtung 1C für einen Parkplatz mit einer bevorzugten geometrischen Anordnung der Magnetometer 2. Die Vorrichtung 1C umfasst mehrere Gruppen mit jeweils zwei Magnetometern 2, die innerhalb der Stellplätze des Parkplatzes bzw. innerhalb einer zu dem jeweiligen Stellplatz im Wesentlichen koplanaren, d.h. horizontalen und ober- oder unterhalb der Oberfläche der Fahrbahn des Stellplatzes liegenden Bezugsfläche angeordnet sind. Der Stellplatz und damit die Bezugsfläche haben eine rechteckige oder parallelogrammförmige Gestalt mit zwei zueinander parallelen Seiten der Länge L und zwei zueinander parallelen Seiten der Länge B. Die zwei Magnetometer 2 sind innerhalb einer mittig zwischen den zwei Seiten L liegenden parallelogrammförmigen bzw. rechteckigen Teilfläche mit einer ersten Seite der Länge L und einer zweiten Seite der Länge B/4 angeordnet. Zudem sind die zwei Magnetometer 2 in Richtung der Seiten L innerhalb eines vorderen Drittels (ausgefüllte Kreise in Fig. 4) und/oder eines hinteren Drittels (offene Kreise in Fig. 4) angeordnet, d.h. in einem Abstand von 0 bis L/3 und/oder 2·L/3 bis L von einer der beiden Seiten B. Wie vorstehend erläutert, kann jeder Stellplatz mit einem, zwei, drei, vier, fünf, sechs, sieben oder mehr, in der vorstehenden Weise innerhalb des Stellplatzes bzw. innerhalb der zum Stellplatz kongruenten Bezugsfläche angeordneten Magnetometer 2 ausgestattet sein. Die erfindungsgemäß bevorzugte Anordnung der Magnetometer 2 mittig auf der Längsachse und innerhalb eines vorderen oder hinteren Drittels des Stellplatzes ist vorteilhaft, weil die Vorder- oder Hinterachse sowie der Motor eines Fahrzeuges das Magnetfeld der Erde besonders stark verzerren und ein entsprechend großes Messsignal in dem Magnetometer hervorrufen.

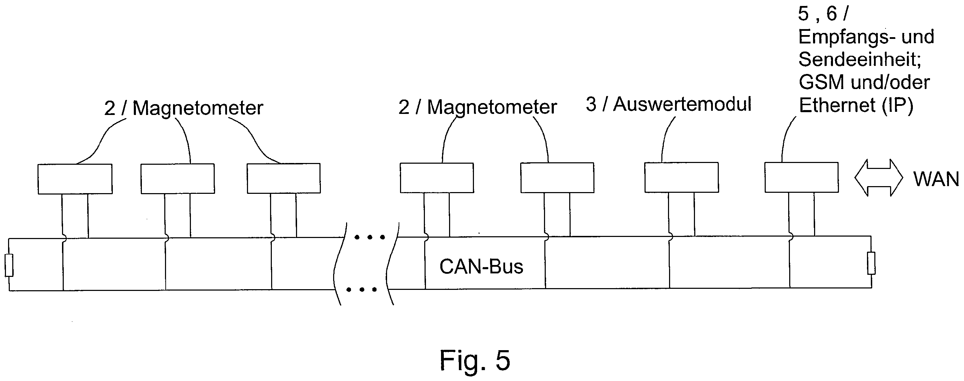

Fig. 5 zeigt ein Blockdiagramm mit den wesentlichen funktionellen Komponenten einer bevorzugten Ausführungsform der Erfindung, bei welcher die Magnetometer 2, das Auswertemodul 3 und die Kommunikationsschnittstelle 5, 6 bzw. die Sende- und Empfangseinheit elektrisch nach Art eines seriellen Bussystems miteinander verbunden sind. Insbesondere ist das Bussystem gemäß der Norm für Controller Area Network (CAN) ausgebildet. Für die Übertragung von CAN Signalen ist mindestens ein drei-adriges Kabel für die Signalpegel CAN-High, CAN-Low und Ground erforderlich. In der schematischen Darstellung der Fig. 5 sind zwecks Übersichtlichkeit lediglich die Kabeladern für die Signalpegel CAN-High und CAN-Low gezeigt. Aus dem gleichen Grund sind in Fig. 5 die Spannungsversorgung und die zugehörigen Kabeladern bzw. eine Verteilerschiene für den Anschluss der Magnetometer 2, des Auswertemoduls 3 und der Kommunikationsschnittstelle 5, 6 an die Spannungsversorgung nicht gezeigt.

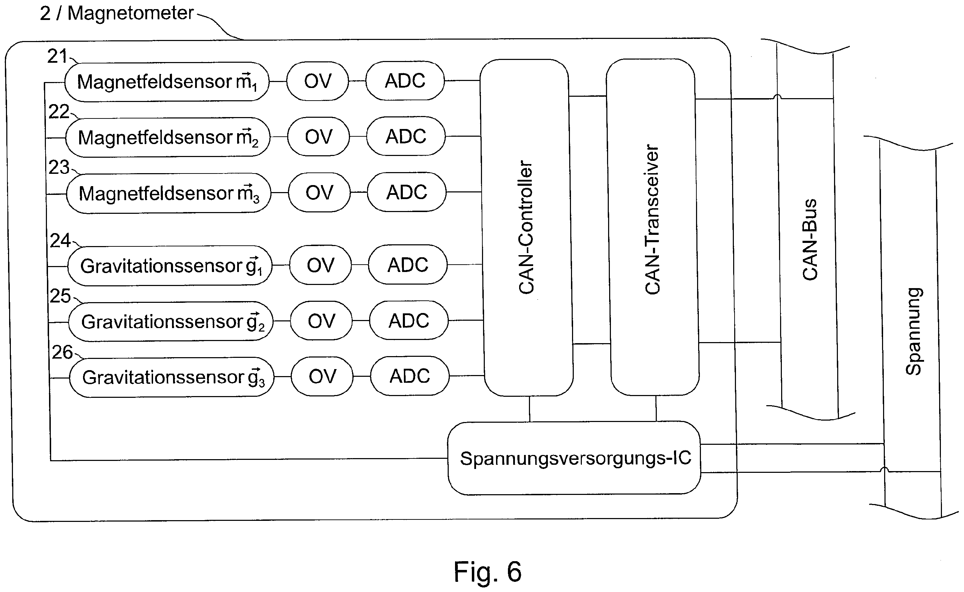

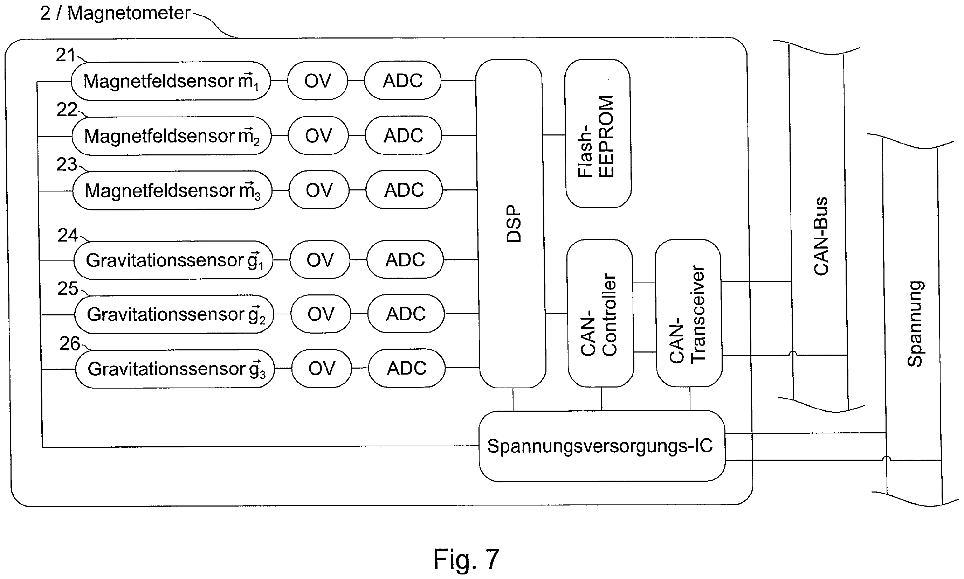

Fig. 6 und 7 zeigen in stark schematisierter Weise eine beispielhafte Konfiguration der wesentlichen schaltungstechnischen Komponenten der Magnetometer 2 für die Messung des geomagnetischen Feldes und des Gravitationsfeldes. Jedes der Magnetometer 2 umfasst mindestens einen Magnetfeldsensor 21 und mindestens einen Gravitionssensor 24. Vorzugsweise umfasst jedes der Magnetometer 2 drei Magnetfeldsensoren 21, 22, 23. Unabhängig von der Anzahl der Magnetfeldsensoren umfasst jedes Magnetometer 2 bevorzugt drei Gravitationssensoren 24, 25, 26. Die Magnetfeldsensoren 21, 22, 23 und die Gravitationssensoren 24, 25, 26 eines Magnetometers 2 sind derart angeordnet, dass ihre Ausgangsignale jeweils proportional sind zur Magnetfelstärke, respektive zur Erdbeschleunigung in drei zueinander nicht koaxialen Raumrichtungen, vorzugsweise in drei zueinander orthogonalen Raumrichtungen. Die drei zueinander nicht koaxialen, vorzugsweise zueinander orthogonalen Raumrichtungen, in denen die drei Magnetfeldsensoren 21, 22, 23 jeweils ausgerichtet sind, sind in Fig. 6 und 7 durch die Vektoren m̅₁, m̅₂ und m̅₃ symbolisiert. Analog hierzu sind die drei zueinander nicht koaxialen, vorzugsweise zueinander orthogonalen Raumrichtungen, in denen die drei Gravitationssensoren 24, 25, 26 jeweils ausgerichtet sind, sind durch die Vektoren g̅₁, g̅₂ und g̅₃ symbolisiert.
Im Weiteren sind in Fig. 6 und 7 übliche schaltungstechnische Elemente, wie Operationsverstärker (OV), Analog-Digital-Wandler (ADC), ein Spannungsversorgungs-IC, ein Bus-Controller, wie beispielweise ein CAN-Controller, ein digitaler Signalprozessor (DSP) sowie ein nichtflüchtiger Datenspeicher, insbesondere ein Flash-EEPROM gezeigt. Mittels der Operationsverstärker (OV) und der Analog-Digital-Wandler (ADC) wird das Signal der Magnetfeldsensoren 21, 22, 23 und der Gravitationssensoren 24, 25, 26 verstärkt und in eine binär kodierte Zahl umgesetzt, d.h. digitalisiert. Die digitalisierten Ausgangssignale der Magnetfeldsensoren 21, 22, 23 und der Gravitationssensoren 24, 25, 26 werden an den Bus-Controller bzw. CAN-Controller übergeben und über die Signaladern des Bus- bzw. CAN-Kabels an ein in Fig. 5 nicht gezeigtes elektronisches Auswertemodul übertragen. Zwischen dem Bus- bzw. CAN-Controller und der CAN-Busleitung ist gegebenenfalls ein Sende- und Empfangsschaltkreis, wie beispielsweise ein CAN-Transceiver angeordnet, der die Ausgangssignale des CAN-Controllers umsetzt und auf die CAN-Busleitung überträgt.
Zweckmäßig sind mehrere Magnetfeldsensoren 21, 22, 23 und/oder mehrere Gravitationssensoren 24, 25, 26 in einem mikroelektronischen Chip bzw. einem mikro-elektromechanischen Schaltkreis (MEMS) integriert. Dementsprechend umfassen die Begriffe "Magnetfeldsensor" und "Gravitationssensor" im Rahmen der vorliegenden Erfindung diskrete monofunktionelle Sensorchips sowie dementsprechende Module bzw. Schaltungsblöcke von integrierten Schaltkreisen (ICs) mit weiteren Funktionsblöcken.

Bei der in Fig. 7 gezeigten Konfiguration werden die digitalisierten Ausgangsignale der Magnetfeldsensoren 21, 22, 23 und der Gravitationssensoren 24, 25, 26 mittels eines in das Magnetometer integrierten Mikroprozessors bzw. digitalen Signalprozessors (DSP) verarbeitet. Zweckmäßig ist der Mikroprozessor bzw. DSP mit einem ebenfalls in das Magnetometer integrierten nicht-flüchtigen Speicher, wie beispielsweise einem Flash-EEPROM verbunden. Der nicht-flüchtige Speicher bzw. Flash-EEPROM dient zur Speicherung eines Programmes, wie beispielsweise eines künstlichen neuronalen Netzes für die Auswertung der digitalisierten Signale der Magnetfeldsensoren 21, 22, 23 und der Gravitationssensoren 24, 25, 26. Zusätzlich zu dem Programm sind in dem nicht-flüchtigen Speicher bzw. Flash-EEPROM gegebenenfalls vorgegebene Parameter, wie beispielsweise die Gewichte für ein künstliches neuronales Netzes gespeichert.

Vorzugsweise umfasst die erfindungsgemäße Vorrichtung zudem ein Soft- oder Firmwareprogramm mit einem geometrischen Algorithmus zur Berechnung der vertikalen und/oder horizontalen Komponente des geomagnetischen Feldes anhand der Ausgangssignale des mindestens einen Magnetfeldsensors 21, 22, 23 und des mindestens einen Gravitationssensors 24, 25, 26. Das Soft- oder Firmwareprogramm ist in einem nichtflüchtigen Speicher, wie beispielsweise einem vorstehend beschriebenen Flash-EEPROM gespeichert.

In einer besonders zweckmäßigen Ausführungsform der Erfindung sind drei Magnetfeldsensoren, drei Gravitationssensoren, Operationsverstärker, Analog-Digital-Wandler, Spannungsversorgungsschaltkreise sowie eine Busschnittstelle in einem Chip integriert.

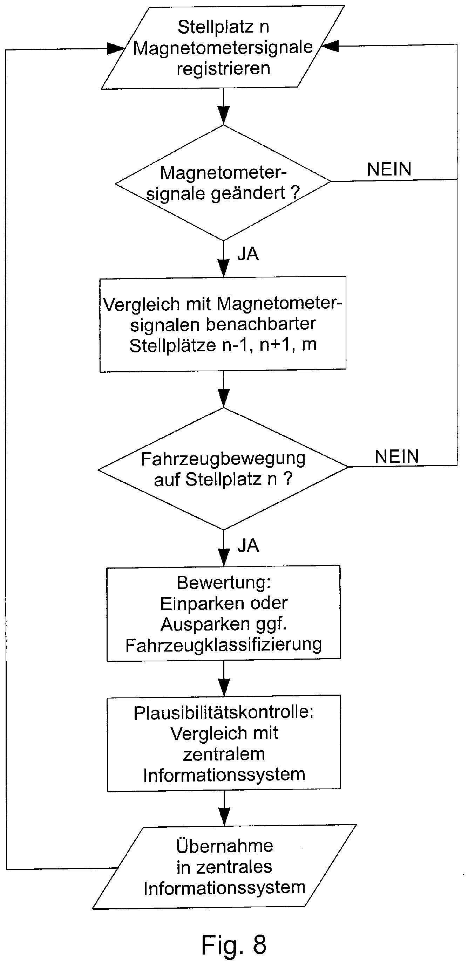

Fig. 8 zeigt in Form eines Flussdiagramms die wesentlichen Schritte, die bei der elektronischen Übertragung, Verarbeitung und Analyse der Ausgangssignale der Magnetometer einer für einen Parkplatz konfigurierten erfindungsgemäßen Vorrichtung ausgeführt werden. Die Verarbeitung der Signale erfolgt analog wie in einer Speicherprogrammierbaren-Steuerung (SPS) in zyklischen Schleifen, wobei die für die Abarbeitung eines Zyklus benötigte Zeit - im Folgenden als Zykluszeit bezeichnet - abhängig von der Anzahl der Magnetometer und von der Anzahl der Fahrzeugbewegungen bzw. Detektionsvorgänge pro Zeiteinheit variiert und typischerweise einige Mikrosekunden bis einige Millisekunden beträgt. In einer ersten Schleife wird ermittelt, ob die Signale der Magnetometer eines ersten von einer Mehrzahl von Stellplätzen des Parkplatzes eine signifikante, insbesondere transiente impulsartige Änderung zeigen, deren Pegel einen vorgegebenen Schwellwert übersteigt. Tritt eine solche signifikante Änderung auf, werden die Signale der Magnetometer eines zweiten, dritten und/oder vierten, zu dem ersten Stellplatz benachbarten Stellplatz mit den Signalen des ersten Stellplatzes programmatisch mittels eines ersten Algorithmus verglichen und entschieden, ob eine Fahrzeugdetektion auf dem ersten Stellplatz vorliegt oder nicht. In Fig. 8 sind der erste, zweite, dritte und vierte Stellplatz respektive durch die Zeichen n, n-1, n+1 und m symbolisiert, wobei der zweite und dritte Stellplatz n-1 und n+1 in der der gleichen Reihe links und rechts unmittelbar neben dem ersten Stellplatz n liegen. Der vierte Stellplatz m hingegen liegt in einer benachbarten Reihe stirnseitig benachbart zu dem ersten Stellplatz n. Die Zeichen n, n-1, n+1 und m repräsentieren die Nummer bzw. den Index jeden Stellplatzes des Parkplatzes und entsprechen ganzen Zahlen. Durch den Vergleich der Magnetometersignale benachbarter Stellplätze wird die Wahrscheinlichkeit einer falsch-positiven Detektion aufgrund Übersprechens von benachbarten Stellplätzen nahezu auf Null reduziert. Sofern die Vorrichtung die Signaländerung auf dem ersten Stellplatz als positive Detektion bzw. als Fahrzeugbewegung bewertet, werden die Signale des ersten Stellplatzes und gegebenenfalls der benachbarten Stellplätze programmatisch mittels eines zweiten Algorithmus ausgewertet, als Einfahr- oder Ausfahrvorgang klassifiziert und gegebenenfalls die Fahrzeugkategorie, wie beispielsweise Pkw, Pkw mit Anhänger, Lkw, Lkw mit Anhänger, Lieferwagen, Bus, Sattelzug, Kraftrad und Sonstige ermittelt. Der erste und zweite Algorithmus sind vorzugsweise wissensbasiert und verwenden in einem nichtflüchtigen Speicher gehaltene, empirisch ermittelte Parameter.

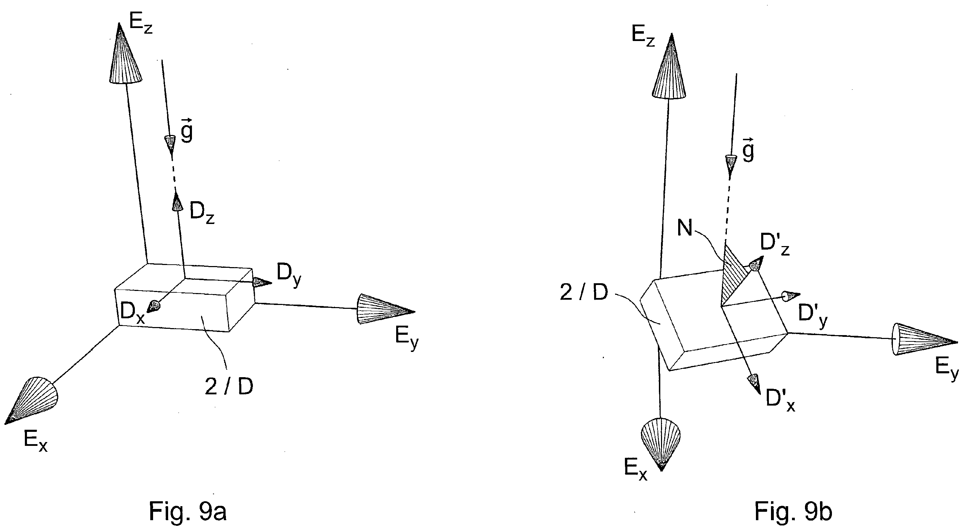

Fig. 9a und 9b zeigen perspektivische Ansichten von räumlichen Ausrichtungen eines Magnetometers D, wobei als Referenz ein Koordinatensystem mit drei zueinander orthogonalen Achsen (Eₓ, E_{y}, E_{z}) zugrunde gelegt wird. Die Achse E_{z} weist in radialer Richtung vom Schwerpunkt der Erde weg, so dass die Schwerkraft bzw. Erdbeschleunigung, die in Fig. 9 durch den Vektor g̅ gekennzeichnet ist, der Achse E_{z} entgegen gerichtet ist. Die Achse E_{y} weist zum geomagnetischen Nordpol. Das Magnetometer D ist mit drei Gravitationssensoren ausgestattet, deren Ausgangssignal jeweils proportional ist zu einer Komponente der Schwerkraft bzw. Erdbeschleunigung in drei zueinander orthogonalen Raumrichtungen. In analoger Weise ist das Magnetometer D mit drei Magnetfeldsensoren ausgerüstet.

Die Orientierung des Magnetometers D in dem Referenz-Koordinatensystem (Eₓ, E_{y}, E_{z}) ist durch ein mit dem Magnetometer D starr gekoppeltes internes Koordinatensystem (Dₓ, D_{y}, D_{z}) angezeigt. In Fig. 9a ist das Magnetometer D so ausgerichtet, dass sein internes Koordinatensystem (Dₓ, D_{y}, D_{z}) koaxial zu dem Referenz-Koordinatensystem (Eₓ, E_{y}, E_{z}) orientiert ist. Die Achsen (Dₓ, D_{y}, D_{z}) entsprechen zugleich den Messrichtungen der drei Gravitationssensoren sowie der drei Magnetfeldsensoren, die in Fig. 6 und 7 durch die Vektoren g̅₁, g̅₂, g̅₃ und m̅₁, m̅₂, m̅₃ symbolisiert sind. In der in Fig. 9a gezeigten, zu (Eₓ, E_{y}, E_{z}) koaxialen Ausrichtung des Magnetometers D ist lediglich das Ausgangssignal, des in der Richtung D_{z} orientierten Gravitationssensors von Null verschieden.

In Fig. 9b ist das Magnetometer D gegenüber seiner Orientierung in Fig. 9a verkippt bzw. rotiert, wobei die Achsen des internen Koordinatensystem des Magnetometers durch (D'ₓ, D'_{y}, D'_{z}) angezeigt sind. Wie jede Rotation im dreidimensionalen Raum, kann die Rotation des Magnetometers von der Ausrichtung (Dₓ, D_{y}, D_{z}) in die Ausrichtung (D'ₓ, D'_{y}, D'_{z}) als Drehung um eine zu einer Ebene N senkrechten Achse um einen Winkel α beschrieben werden. Die Ebene N, die in Fig. 9b durch Schraffur gekennzeichnet ist, wird durch die Achse E_{z} bzw. die Richtung g̅ und die Achse D'_{z} aufgespannt. Wenn n̂ den Normalvektor der Ebene N bezeichnet, so kann die Rotation des Magnetometers mathematisch durch eine Matrix R (n̂, α) mit den nachstehenden Elementen repräsentiert werden: $\hat{n} = \left({n}_{x}, {n}_{y}, {n}_{z}\right) { mit n}_{x}^{2} + {n}_{y}^{2} + {n}_{z}^{2} = 1$ $R \left(\hat{n}, α\right) = \left(\begin{matrix}{n}_{x}^{2} \left(1-cosα\right) + cos α & {n}_{x} {n}_{y} \left(1-cosα\right) + {n}_{z} sin α & {n}_{z} {n}_{x} \left(1-cosα\right) - + {n}_{y} sin α \\ {n}_{x} {n}_{y} \left(1-cosα\right) + {n}_{z} sin α & {n}_{y}^{2} \left(1-cosα\right) + cos α & {n}_{y} {n}_{z} \left(1-cosα\right) - {n}_{x} sin α \\ {n}_{z} {n}_{x} \left(1-cosα\right) - {n}_{y} sin α & {n}_{y} {n}_{z} \left(1-cosα\right) + {n}_{x} sin α & {n}_{z}^{2} \left(1-cosα\right) + cos α\end{matrix}\right)$

Die zu R(n̂, α) inverse Operation, die das Magnetometer D in seine ursprüngliche Orientierung (siehe Fig. 9a) zurück dreht, wird mathematisch durch die Matrix R(n̂,-α) beschrieben.

In der in Fig. 9b gezeigten Magnetometerausrichtung (D'ₓ, D'_{y}, D'_{z}) sind die Ausgangssignale der der drei Gravitationssensoren jeweils proportional zu den Komponenten (g'ₓ, g'_{y}, g'_{z}) der Schwerkraft g̅ in Richtung der drei Achsen (D'ₓ, D'_{y}, D'_{z}). Die Elemente der Matrix R(n̂,α) bzw. R(n̂,-α) können anhand der nachstehenden Beziehungen auf einfache Weise berechnet werden: $\vec{g} = \left(g{′}_{x},g{′}_{y},g{′}_{z}\right)$ $\hat{n} = \frac{1}{\sqrt{{\left({g}_{x}′\right)}^{2} + {\left({g}_{y}′\right)}^{2}}} \left({g}_{y}′,-{g}_{x}′,0\right)$ $α = arccos \left(\frac{{g}_{z} ′}{\sqrt{{\left({g}_{x}′\right)}^{2} + {\left({g}_{y}′\right)}^{2} + {\left({g}_{z}′\right)}^{2}}}\right)$

Außerdem sind in der in Fig. 9b gezeigten Magnetometerausrichtung (D'ₓ, D'_{y}, D'_{z}) die Ausgangssignale der drei Magnetfeldsensoren jeweils proportional zu den Komponenten (m'ₓ, m'_{y}, m'_{z}) des Erdmagnetfeldes in Richtung der drei Achsen (D'ₓ, D'_{y}, D'_{z}). Die vertikalen und horizontalen Komponenten des Erdmagnetfeldes können berechnet werden, indem der Vektor (m'ₓ, m'_{y}, m'_{z}) mit der Matrix R(n̂,-α) multipliziert wird, was einer Rotation des Magnetometers D von der Ausrichtung (D'ₓ, D'_{y}, D'_{z}) in die Ausrichtung (Dₓ, D_{y}, D_{z}) gleich kommt. Hierbei wird der Vektor m̅' = (m'ₓ,m'_{y},m'_{z}) in den Vektor m̅ = (mₓ,m_{y},m_{z}) transformiert, d.h. m̅ = R(n̂,-α)∗m̅', wobei m_{z} die vertikale Komponente und (mₓ,m_{y}) bzw. $\sqrt{{m}_{x}^{2} + {m}_{y}^{2}}$ die horizontale Komponente des Erdmagnetfeldes repräsentiert.

Die vorstehend beschriebene Berechnung der Vertikal- und Horizontalkomponenten des Erdmagnetfeldes setzt voraus, dass die Ausgangssignale der drei Gravitationssensoren und der drei Magnetfeldsensoren relativ zueinander elektronisch kalibriert sind. Die Gravitationssensoren werden relativ zueinander kalibriert, indem nacheinander das Magnetometer D bzw. jeder der drei Gravitationssensoren, d.h. die internen Koordinatenachsen (Dₓ, D_{y}, D_{z}) in Richtung der Schwerkraft bzw. der Erdbeschleunigung g̅ orientiert und das Ausgangssignal des betreffenden Gravitationssensors registriert wird. Hieran anschließend wird je nach Pegelhöhe des registrierten Ausgangssignals ein individueller Kalibrierfaktor derart bestimmt, dass das Produkt aus der jeweiligen Pegelhöhe und dem jeweiligen Kalibrierfaktor für alle drei Gravitationssensoren gleich ist. Die drei Kalibrierfaktoren der Gravitationssensoren werden in einem nicht-flüchtigen Speicher gehalten und bei der Berechnung der Matrix R(n̂, -α) bzw. bei der Berechnung des Normalvektors n̂ und des Drehwinkels α verwendet. In analoger Weise werden die Magnetfeldsensoren relativ zueinander kalibriert, indem nacheinander das Magnetometer D bzw. jeder der drei Magnetfeldsensoren, d.h. die internen Koordinatenachsen (Dₓ, D_{y}, D_{z}) des Magnetometers in einer vorgegebenen Richtung, insbesondere horizontal auf den geomagnetischen Nordpol ausgerichtet und das Ausgangssignal des betreffenden Magnetfeldsensors registriert wird. Hieran anschließend wird je nach Pegelhöhe des registrierten Ausgangssignals ein individueller Kalibrierfaktor derart bestimmt, dass das Produkt aus der jeweiligen Pegelhöhe und dem jeweiligen Kalibrierfaktor für alle drei Magnetfeldsensoren gleich ist.

## Patentansprüche

1. Verkehrsleitsystem, umfassend eine oder mehrere Vorrichtungen (1, 1A, 1B, 1C) zur bcrührungsloscn Dctcktion von Fahrzeugen mit einem oder mehreren Magnetometern (2) für die Messung des geomagnetischen Feldes und eine oder mehrere, mit der mindestens einen Vorrichtung (1, 1A, 1B, 1C) verbundene Leiteinrichtungen, Signalvorrichtungen, und/oder Informationssysteme, **dadurch gekennzeichnet, dass** das mindestens eine Magnetometer (2) eine Einrichtung für die Messung des Gravitationsfeldes umfasst und oberhalb oder unterhalb der Oberfläche einer Fahrbahn oder eines Parkplatzes angeordnet ist, die Vorrichtung (1, 1A, 1B, 1C) ein oder mehrere elektronische Auswertemodule (3) umfasst, die mit einem integrierten Schaltkreis, einem Mikroprozessor, einem digitalen Signalprozessor (DSP), einem Field Programmable Gate Array (FPGA) oder einem Application Specific Integrated Circuit (ASIC) ausgestattet und mit dem mindestens einen Magnetometer (2) verbunden oder integriert sind.

2. Verkehrsleitsystem nach Anspruch 1, **dadurch gekennzeichnet, dass** es mindestens eine Ampel, Lichtsignalanlage oder Schranke und/oder mindestens ein Navigationssystem umfasst.

3. Verkehrsleitsystem nach Anspruch 1 oder 2, **dadurch gekennzeichnet, dass** die Vorrichtung (1, 1A, 1B, 1C) eine oder mehrere Gruppen von Magnetometern (2) umfasst, wobei jede Gruppe zwei, drei, vier oder mehr, entlang einer verkehrstechnisch vorgegebenen Fahrtrichtung und voneinander beabstandet angeordnete Magnetometer (2) umfasst.

4. Verkehrsleitsystem nach einem oder mehreren der Ansprüche 1 bis 3, **dadurch gekennzeichnet, dass** das mindestens eine elektronische Auswertemodul (3) der Vorrichtung (1, 1A, 1B, 1C) einen nichtflüchtigen digitalen Speicher umfasst.

5. Verkehrsleitsystem nach einem oder mehreren der Ansprüche 1 bis 4, **dadurch gekennzeichnet, dass** jedes der Magnetometer (2) der Vorrichtung (1, 1A, 1B, 1C) mindestens einen Magnetfeldsensor (21, 22, 23) und mindestens einen Gravitationssensor (24, 25, 26) umfasst.

6. Verkehrsleitsystem nach Anspruch 5, **dadurch gekennzeichnet, dass** jedes der Magnetometer (2) der Vorrichtung (1, 1A, 1B, 1C) drei Magnetfeldsensoren (21, 22, 23) umfasst, die derart angeordnet sind, dass die Ausgangssignale der drei Magnetfeldsensoren (21, 22, 23) jeweils proportional sind zu der Magnetfeldstärke in drei zueinander nicht koaxialen Raumrichtungen.

7. Verkehrsleitsystem nach Anspruch 5 oder 6, **dadurch gekennzeichnet, dass** der mindestens eine Magnetfeldsensor (21, 22, 23) der Vorrichtung (1, 1A, 1B, 1C) als integrierter elektronischer Schaltkreis ausgebildet ist.

8. Verkehrsleitsystem nach einem oder mehreren der Ansprüche 5 bis 7, **dadurch gekennzeichnet, dass** der mindestens eine Magnetfeldsensor (21, 22, 23) der Vorrichtung (1, 1A, 1B, 1C) auf dem magnetoresistiven (MR-), anisotropmagnetoresistiven (AMR-), giant-magnetoresistiven (GMR-), tunnel-magnetoresistiven (TMR-) oder giant-magnetic-inductance (GMI-) Effekt basiert oder dass der mindestens eine Magnetfeldsensor (21, 22, 23) als Fluxgate-Magnetometer (Förster-Sonde) ausgebildet ist.

9. Verkehrsleitsystem nach einem oder mehreren der Ansprüche 5 bis 8, **dadurch gekennzeichnet, dass** jedes der Magnetometer (2) der Vorrichtung (1, 1A, 1B, 1C) drei Gravitationssensoren (24, 25, 26) umfasst, die derart angeordnet sind, dass die Ausgangssignale der drei Gravitationssensoren (24, 25, 26) jeweils proportional sind zu der Erdbeschleunigung in drei zueinander nicht koaxialen Raumrichtungen.

10. Verkehrsleitsystem nach einem oder mehreren der Ansprüche 5 bis 9, **dadurch gekennzeichnet, dass** der mindestens eine Gravitationssensor (24, 25, 26) als mikro-elektro-mechanisches Bauelement (MEMS) ausgebildet ist.

11. Verkehrsleitsystem nach einem oder mehreren der Ansprüche 1 bis 10, **dadurch gekennzeichnet, dass** die Vorrichtung (1, 1A, 1B, 1C) ein Soft- oder Firmwareprogramm umfasst mit einem geometrischen Algorithmus zur Berechnung der vertikalen und/oder horizontalen Komponente des geomagnetischen Feldes; und/oder die Vorrichtung (1, 1A, 1B, 1C) ein Bus-System umfasst; und/oder die Vorrichtung (1, 1A, 1B, 1C) eine Empfangs- und Sendeeinheit für Mobilfunk (5) und/oder eine Empfangs- und Sendeeinheit für Ethernet (6) umfasst; und/oder das mindestens eine Magnetometer (2) über das Internet mit dem mindestens einen elektronischen Auswertemodul (3) verbunden ist.

12. Verfahren zur berührungslosen Detektion von Fahrzeugen, umfassend die Schritte:
(a) Bereitstellen einer oder mehrerer Vorrichtungen (1, 1A, 1B, 1C), umfassend mehrere Magnetometer (2) für die Messung des geomagnetischen Feldes und des Gravitationsfeldes sowie ein oder mehrere elektronische Auswertemodule (3), wobei die Magnetometer (2) oberhalb oder unterhalb der Oberfläche einer Fahrbahn oder eines Parkplatzes angeordnet und mit dem mindestens einen Auswertemodul (3) verbunden sind;
(b) Übertragung der Ausgangssignale der Magnetometer (2) an das mindestens eine Auswertemodul (3); und
(c) softwaregestützte Verarbeitung der Ausgangssignale der Magnetometer (2) in dem mindestens einen Auswertemodul (3) und Übersetzung in Ausgabesignale;
wobei in Schritt (b) und (c) die Ausgangssignale von zwei, drei, vier oder mehr entlang einer verkehrstechnisch vorgegebenen Fahrtrichtung und voneinander beabstandet angeordneten Magnetometern (2) an das Auswertemodul (3) übertragen und verarbeitet werden, um Ausgabesignale zu erzeugen; und/oder in Schritt (b) und (c) die Ausgangssignale von einem oder mehreren oberhalb oder unterhalb eines ersten Stellplatzes eines Parkplatzes angeordneten Magnetometern (2) und die Ausgangssignale von einem oder mehreren oberhalb oder unterhalb eines zweiten, dritten und /oder vierten Stellplatzes des Parkplatzes angeordneten Magnetometern (2) an das Auswertemodul (3) übertragen und verarbeitet werden, um Ausgabesignale zu erzeugen, wobei der zweite, dritte und/oder vierte Stellplatz zu dem ersten Stellplatz benachbart sind; und die in Schritt (c) erzeugten Ausgabesignale drahtgebunden, glasfasergebunden oder drahtlos an ein elektronisches Steuerungs- und/oder Informationssystem übertragen werden.

13. Verfahren nach Anspruch 12, **dadurch gekennzeichnet, dass** die Magnetfeldstärke in drei zueinander nicht koaxialen Raumrichtungen gemessen wird; und/oder dass die Gravitation bzw. Erdbeschleunigung in drei zueinander nicht koaxialen Raumrichtungen gemessen wird.

14. Verfahren nach Anspruch 12 oder 13, **dadurch gekennzeichnet, dass** in Schritt (c) die vertikale und/oder horizontale Komponente des geomagnetischen Feldes anhand der mit dem mindestens einen Magnetometer (2) gemessenen Stärke und Richtung des geomagnetischen Feldes berechnet wird auf Basis einer geometrischen Transformation, deren Parameter aus der mit dem Magnetometer (2) gemessenen Stärke und Richtung des Gravitationsfeldes bestimmt werden.

15. Verfahren nach einem oder mehreren der Ansprüche 12 bis 14, **dadurch gekennzeichnet, dass** in Schritt (c) zur Verarbeitung der Ausgangssignale ein wissensbasierter Algorithmus in Verbindung mit einer Datenbank mit vorgegebenen Parametern oder ein künstliches neuronales Netz in Verbindung mit einer Datenbank mit vorgegebenen Gewichtsparametern eingesetzt wird.

## Claims

1. Traffic control system comprising one or more devices (1, 1A, 1B, 1C) for the contactless detection of vehicles having one or more magnetometers (2) for measuring the geometric field and one or more control devices, signal devices and/or information systems which are connected to the at least one device (1, 1A, 1B, 1C), **characterized in that** the at least one magnetometer (2) comprises an apparatus for measuring the gravitational field and is arranged above or below the surface of a roadway or of a carpark, the device (1, 1A, 1B, 1C) comprises one or more electronic evaluation modules (3) which are equipped with an integrated circuit, a microprocessor, a digital signal processor (DSP), a field programmable gate array (FPGA) or an application specific integrated circuit (ASIC) and are connected to the at least one magnetometer (2) or integrated therewith.

2. Traffic control system according to Claim 1, **characterized in that** said system comprises at least one set of traffic lights, traffic light system or barrier and/or at least one navigation system.

3. Traffic control system according to Claim 1 or 2, **characterized in that** the device (1, 1A, 1B, 1C) comprises one or more groups of magnetometers (2), wherein each group comprises two, three, four or more magnetometers (2) which are arranged along a travel direction predefined by traffic technology and are arranged spaced apart from one another.

4. Traffic control system according to one or more of Claims 1 to 3, **characterized in that** the at least one electronic evaluation module (3) of the device (1, 1A, 1B, 1C) comprises a non-volatile digital memory.

5. Traffic control system according to one or more of Claims 1 to 4, **characterized in that** each of the magnetometers (2) of the device (1, 1A, 1B, 1C) comprises at least one magnetic field sensor (21, 22, 23) and at least one gravitation sensor (24, 25, 26) .

6. Traffic control system according to Claim 5, **characterized in that** each of the magnetometers (2) of the device (1, 1A, 1B, 1C) comprises three magnetic field sensors (21, 22, 23) which are arranged in such a way that the output signals of the three magnetic field sensors (21, 22, 23) are each proportional to the magnetic field strength in three spatial directions which are not coaxial with respect to one another.

7. Traffic control system according to Claim 5 or 6, **characterized in that** the at least one magnetic field sensor (21, 22, 23) of the device (1, 1A, 1B, 1C) is embodied as an integrated electronic circuit.

8. Traffic control system according to one or more of Claims 5 to 7, **characterized in that** the at least one magnetic field sensor (21, 22, 23) of the device (1, 1A, 1B, 1C) is based on the magneto resistive (MR) effect, anisotropic magneto resistive (AMR) effect, giant magneto resistive (GMR) effect, tunnel-magneto resistive (TMR) effect or giant magnetic inductance (GMI) effect, or **in that** the at least one magnetic field sensor (21, 22, 23) is embodied as a flux gate magnetometer (Forster probe).

9. Traffic control system according to one or more of Claims 5 to 8, **characterized in that** each of the magnetometers (2) of the device (1, 1A, 1B, 1C) comprises three gravitation sensors (24, 25, 26) which are arranged in such a way that the output signals of the three gravitation sensors (24, 25, 26) are each proportional with respect to the acceleration due to gravity in three spatial directions which are not coaxial with respect to one another.

10. Traffic control system according to one or more of Claims 5 to 9, **characterized in that** the at least one gravitation sensor (24, 25, 26) is embodied as a micro-electro-mechanical component (MEMS).

11. Traffic control system according to one or more of Claims 1 to 10, **characterized in that** the device (1, 1A, 1B, 1C) comprises a software program or firmware program with a geometric algorithm for calculating the vertical and/or horizontal component of the geomagnetic field; and/or the device (1, 1A, 1B, 1C) comprises a bus system; and/or the device (1, 1A, 1B, 1C) comprises a transceiver unit for a mobile radio (5) and/or a transceiver unit for an Ethernet (6); and/or the at least one magnetometer (2) is connected to the at least one electronic evaluation module (3) via the Internet.

12. Method for the contactless detection of vehicles, comprising the steps:
(a) providing one or more devices (1, 1A, 1B, 1C) comprising a plurality of magnetometers (2) for measuring the geometric field and the gravitational field and one or more electronic evaluation modules (3), wherein the magnetometers (2) are arranged above or below the surface of a roadway or a car park and are connected to the at least one evaluation module (3) ;
(b) transmitting the output signals of the magnetometers (2) to the at least one evaluation module (3); and
(c) software-supported processing of the output signals of the magnetometers (2) in the at least one evaluation module (3) and conversion into data signals;
wherein in step (b) and (c) the output signals of two, three, four or more magnetometers (2) which are arranged along a travel direction predefined by traffic technology and are arranged spaced apart from one another are transmitted to the evaluation module (3) and processed in order to generate data signals; and/or in step (b) and (c) the output signals of one or more magnetometers (2) which are arranged above or below a first parking space of a car park and the output signals of one or more magnetometers (2) which are arranged above or below a second, third and/or fourth parking space of the car park are transmitted to the evaluation module (3) and processed in order to generate data signals, wherein the second, third and/or fourth parking spaces are adjacent to the first parking space; and the data signals which are generated in step (c) are transmitted in a wire-bound, glass fibre-bound or wireless fashion to an electronic control system and/or information system.

13. Method according to Claim 12, **characterized in that** the magnetic field strength is measured in three spatial directions which are not coaxial with respect to one another; and/or **in that** the gravitation or acceleration due to gravity are/is measured in three spatial directions which are not coaxial with respect to one another.

14. Method according to Claim 12 or 13, **characterized in that** in step (c) the vertical and/or horizontal component of the geometric field is calculated on the basis of the strength and direction of the geometric field, measured with the at least one magnetometer (2) on the basis of a geometric transformation whose parameters are determined from the strength and direction of the gravitational field measured with the magnetometer (2).

15. Method according to one or more of Claims 12 to 14, **characterized in that** in step (c) a knowledge-based algorithm in conjunction with a database with predefined parameters or an artificial neural network in conjunction with a database with predefined weight parameters is used to process the output signals.

## Revendications

1. Système de régulation de trafic, comprenant un ou plusieurs dispositifs (1, 1A, 1B, 1C) pour une détection sans contact de véhicules avec un ou plusieurs magnétomètres (2) pour la mesure du champ géomagnétique et un ou plusieurs dispositifs de régulation, dispositifs de signalisation et/ou systèmes d'information connectés à l'au moins un dispositif (1, 1A, 1B, 1C), **caractérisé en ce que** l'au moins un magnétomètre (2) comprend un dispositif de mesure du champ gravitationnel et est agencé au-dessus ou au-dessous de la surface d'une chaussée ou d'un parking, le dispositif (1, 1A, 1B, 1C) comprend un ou plusieurs modules électroniques d'évaluation (3), qui sont équipés d'un circuit intégré, d'un microprocesseur, d'un processeur de signal numérique (DSP), d'un réseau prédiffusé programmable par utilisateur (FPGA) ou d'un circuit intégré à application spécifique (ASIC) et sont connectés ou intégrés à l'au moins un magnétomètre (2).

2. Système de régulation de trafic selon la revendication 1, **caractérisé en ce qu'**il comprend au moins un feu, un système de signalisation lumineuse ou une barrière et/ou au moins un système de navigation.

3. Système de régulation de trafic selon la revendication 1 ou 2, **caractérisé en ce que** le dispositif (1, 1A, 1B, 1C) comprend un ou plusieurs groupes de magnétomètres (2), dans lequel chaque groupe comprend deux, trois, quatre magnétomètres (2) ou plus agencés le long d'une direction de circulation prédéterminée technologiquement et à distance les uns des autres.

4. Système de régulation de trafic selon l'une quelconque ou plusieurs des revendications 1 à 3, **caractérisé en ce que** l'au moins un module électronique d'évaluation (3) du dispositif (1, 1A, 1B, 1C) comprend une mémoire numérique non volatile.

5. Système de régulation de trafic selon l'une quelconque ou plusieurs des revendications 1 à 4, **caractérisé en ce que** chaque magnétomètre (2) du dispositif (1, 1A, 1B, 1C) comprend au moins un capteur de champ magnétique (21, 22, 23) et au moins un capteur gravitationnel (24, 25, 26).

6. Système de régulation de trafic selon la revendication 5, **caractérisé en ce que** chaque magnétomètre (2) du dispositif (1, 1A, 1B, 1C) comprend trois capteurs de champ magnétique (21, 22, 23), qui sont agencés de sorte que les signaux de sortie des trois capteurs de champ magnétique (21, 22, 23) soient respectivement proportionnels à l'intensité de champs magnétique dans trois directions spatiales non coaxiales les unes par rapport aux autres.

7. Système de régulation de trafic selon la revendication 5 ou 6, **caractérisé en ce que** l'au moins un capteur de champ magnétique (21, 22, 23) du dispositif (1, 1A, 1B, 1C) est réalisé sous la forme d'un circuit électronique intégré.

8. Système de régulation de trafic selon l'une quelconque ou plusieurs des revendications 5 à 7, **caractérisé en ce que** l'au moins un capteur de champ magnétique (21, 22, 23) du dispositif (1, 1A, 1B, 1C) est basé sur l'effet magnétorésistif (MR) magnétorésistif anisotrope (AMR), magnétorésistif géant (GMR), magnétorésistif tunnel (TMR) ou d'impédance magnétique géante (GMI) ou **en ce que** l'au moins un capteur de champ magnétique (21, 22, 23) est conçu sous la forme d'une sonde magnétométrique (sonde de Förster).

9. Système de régulation de trafic selon l'une quelconque ou plusieurs des revendications 5 à 8, **caractérisé en ce que** chaque magnétomètre (2) du dispositif (1, 1A, 1B, 1C) comprend trois capteurs gravitationnels (24, 25, 26) qui sont agencés de sorte que les signaux de sortie des trois capteurs gravitationnels (24, 25, 26) soient chacun proportionnels à l'accélération gravitationnelle dans trois directions spatiales qui ne sont pas mutuellement coaxiales.

10. Système de régulation de trafic selon l'une quelconque ou plusieurs des revendications 5 à 9, **caractérisé en ce que** l'au moins un capteur gravitationnel (24, 25, 26) est réalisé sous la forme d'un composant micro-électromécanique (MEMS).

11. Système de régulation de trafic selon l'une quelconque ou plusieurs des revendications 1 à 10, **caractérisé en ce que** le dispositif (1, 1A, 1B, 1C) comprend un programme de logiciel ou un programme de micrologiciel avec un algorithme géométrique de calcul de la composante verticale et/ou horizontale du champ géomagnétique; et/ou le dispositif (1, 1A, 1B, 1C) comprend un système de bus ; et/ou le dispositif (1, 1A, 1B, 1C) comprend une unité de réception et d'émission de radiotéléphonie mobile (5) et/ou une unité de réception et d'émission pour l'Ethernet (6) ; et/ou l'au moins un magnétomètre (2) est connecté à l'au moins un module électronique d'évaluation (3) via l'Internet.

12. Procédé de détection sans contact de véhicules, comprenant les étapes consistant à :
(a) fournir un ou plusieurs dispositifs (1, 1A, 1B, 1C), comprenant plusieurs magnétomètres (2) pour mesurer le champ géomagnétique et le champ gravitationnel ainsi qu'un ou plusieurs modules d'évaluation électroniques (3), dans lequel les magnétomètres (2) sont agencés au-dessus ou au-dessous de la surface d'une chaussée ou d'un parking et sont connectés à l'au moins un module d'évaluation (3) ;
(b) transmettre des signaux de sortie du magnétomètre (2) à l'au moins un module d'évaluation (3) ; et
(c) traiter avec assistance d'un logiciel des signaux de sortie du magnétomètre (2) dans l'au moins un module d'évaluation (3) et les transformer en signaux de commande de sortie ;
dans lequel dans les étapes (b) et (c), les signaux de sortie de deux, trois, quatre magnétomètres (2) ou plus agencés le long d'une direction de circulation prédéterminée technologiquement et à distance les uns des autres sont transmis et traités au niveau du module d'évaluation (3) afin de générer des signaux de commande de sortie ; et/ou à l'étape (b) et (c), les signaux de sortie d'un ou plusieurs magnétomètres (2) agencés au-dessus ou au-dessous d'une première place de stationnement d'un parking et les signaux de sortie d'un ou plusieurs magnétomètres (2) agencés au-dessus ou au-dessous d'une deuxième, troisième et/ou quatrième places de stationnement du parking sont transmis et traités au niveau du module d'évaluation (3) pour générer des signaux de de commande de sortie, dans lequel les deuxième, troisième et/ou quatrième places de stationnement sont adjacente à la première place de stationnement ; et les signaux de commande de sortie générés à l'étape (c) sont transmis par fil, fibre optique ou sans fil à un système électronique de commande et/ou d'information.

13. Procédé selon la revendication 12, **caractérisé en ce que** l'intensité de champ magnétique est mesurée dans trois directions spatiales non coaxiales les unes par rapport aux autres ; et/ou **en ce que** la gravitation ou l'accélération gravitationnelle est mesurée dans trois directions spatiales qui ne sont pas coaxiales les unes par rapport aux autres.

14. Procédé selon la revendication 12 ou 13, **caractérisé en ce que** dans l'étape (c), la composante verticale et/ou horizontale du champ géomagnétique s'appuyant sur l'intensité mesurée avec l'au moins un magnétomètre (2) et la direction du champ géomagnétique est calculée sur la base d'une transformation géométrique, dont des paramètres sont déterminés à partir de l'intensité mesurée avec le magnétomètre (2) et de la direction du champ gravitationnel.

15. Procédé selon une ou plusieurs des revendications 12 à 14, **caractérisé en ce que** dans l'étape (c), pour traiter les signaux de sortie, un algorithme basé sur la connaissance est utilisé conjointement avec une base de données avec des paramètres prédéterminés, ou un réseau neuronal artificiel est utilisé conjointement avec une base de données ayant des paramètres de pondération prédéterminés.
